# EUROPEAN PATENT SPECIFICATION

(11) **EP 1 948 861 B1**
(45) Date of publication and mention of the grant of the patent: **14.09.2016**
(21) Application number: 06753562.5
(22) Date of filing: 11.05.2006
(51) Int. Cl.: D06N 3/00, B62J 1/18

(54) **SYNTHETIC LEATHER WITH HIGH INFRARED RADIATION REFLECTANCE**
KUNSTLEDER MIT STARKER REMISSION VON INFRAROTSTRAHLEN
CUIR SYNTHETIQUE PRESENTANT UNE REFLEXION DES RAYONS INFRAROUGES ELEVEE

(30) Priority: 15.11.2005 IT PD20050332
(43) Date of publication of application: 30.07.2008
(73) Proprietor: Spac S.P.A., 36071 Arzignano VI (IT)
(72) Inventor: BEDESCHI, Edoardo, I-30040 Alonte (IT); BEDESCHI, Giovanni, I-37142 Verona (IT); BEDESCHI, Giuliano, I-30040 Alonte (IT)
(74) Representative: Susanetto, Carlo
(86) International application number: PCT/EP2006/004421
(87) International publication number: WO 2007/057058

(56) References cited:
- EP-A- 1 179 628
- EP-A- 1 553 225
- US-A1- 2004 018 360
- DATABASE WPI Section Ch, Week 200138 Derwent Publications Ltd., London, GB; Class A25, AN 1995-119215 XP002394386 & JP 03 180238 B2 (SEIREN CO LTD) 25 June 2001 (2001-06-25)
- PATENT ABSTRACTS OF JAPAN vol. 2000, no. 22, 9 March 2001 (2001-03-09) & JP 2001 122044 A (T S TEC KK), 8 May 2001 (2001-05-08)

## Description

### Technical field

The present invention relates to a synthetic leather with high infrared radiation reflectance, having the characteristics mentioned in the preamble of the main claim.

### Technological background

The present invention finds particular, although not exclusive, application in the field of manufacture of synthetic leathers for covering saddles and accessories for cycles, motorcycles and vehicles in general.

In this field it is known to employ low-cost synthetic leathers as covering for an inner padding of soft polymeric material, for example an expanded polyurethane.

A specific family of synthetic leathers employed in this field is constituted by leathers obtained by means of spreading technique, generally multi-layered, for example based on polyurethane (PU) or plastisol based on polyvinyl chloride (PVC), these latter also known in the field as vinyl leathers.

The market often requires the synthetic leathers used to be of a dark colour, normally black, and the leathers therefore have added to them pigments capable of absorbing the greater part of luminous radiation in the visible spectrum. The pigment more commonly employed in the field is carbon black, which is added to one or more of the layers constituting the synthetic leather.

These leathers, however, have some drawbacks, the main one being constituted by the fact that, because of the dark or black coloration, they tend to overheat when exposed to solar radiation, reaching relatively high temperatures within a short time. In the case of synthetic leathers employed as covering for saddles for bicycles or motor cycles or for seats in motor vehicles, this situation occurs particularly frequently during the summer months, and is particularly unpleasant in as far as the synthetic leather comes into direct contact with the human body.

In the field of processing of natural leathers, it is known to use particular pigments capable of absorbing a large part of the luminous radiation in the visible spectrum, therefore imparting to the leather a black, or at least dark, coloration and, at the same time, of reflecting a large part of the infrared radiation, responsible for the heating of the leather.

European Patent Application No. 1553225 also describes the use of pigments of the type described above in an artificial leather obtained from polyester microfibre.

However, the use of natural leathers or leathers based on microfibre generally proves too expensive and often not very suited to the specific applications in which the synthetic leathers obtained by spreading are used at present.

US2004/018360 and EP1179628 disclose synthetic leathers having the features outlined in the preamble of main claim and represent relevant examples of leathers according to the prior art.

### Description of the invention

The problem underlying the present invention is that of producing a synthetic leather structurally and functionally designed to overcome the limitations described above with reference to the prior art cited.

This problem is solved by the present invention by means of a synthetic leather produced in accordance with the following claims.

### Brief description of the drawings

The characteristics and advantages of the invention will become clearer from the detailed description of a preferred exemplary embodiment thereof, illustrated by way of non-limiting example with reference to the appended drawings, in which:
- Figure 1 is a diagrammatic view in section of a synthetic leather produced according to the present invention,
- Figure 2 is a diagram representing the course of the reflectance in dependence on the wavelength of the electromagnetic radiation of a leather produced according to the prior art,
- Figure 3 is a diagram analogous to that shown in Figure 2 but relating to the synthetic leather of Figure 1,
- Figure 4 is a diagram analogous to that of Figure 2, but relating to an alternative embodiment of the synthetic leather of Figure 1,
- Figure 5 is a diagram analogous to that of Figure 2, relating to the synthetic leather which is the subject of the diagram of Figure 4, but in a different state of analysis.

### Preferred way of implementing the invention

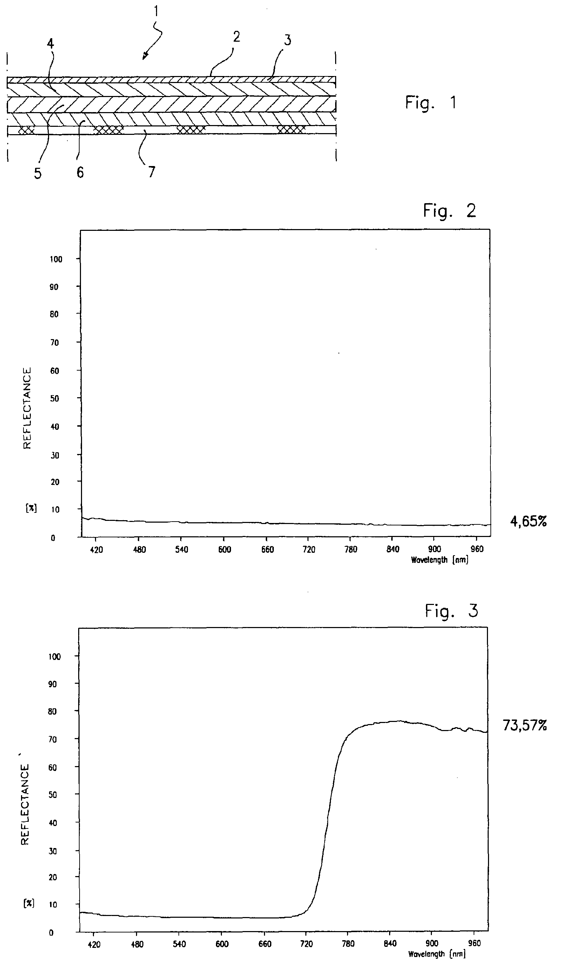

In Figure 1, a synthetic leather produced according to the present invention is indicated as a whole by 1.

On the leather 1 an outer surface 2 is defined which, in the final application of the leather, is intended to be facing outwards, and therefore in view. A preferred example of application of the leather 1 is that of covering for bicycle or motorcycle saddles, but other applications are of course included, such as coverings for seats, steering wheels or other vehicle accessories in general.

The leather 1 comprises a plurality of superposed layers obtained by means of the technique of spreading a polymeric material suitable for this type of processing.

Polymeric materials of this type may be polyurethane-based or, preferably, based on polyvinyl chloride (PVC) plastisol, this term being intended to identify a PVC-based polymeric mixture produced by means of polymerisation in emulsion and suitably dispersed in a phthalic-based plasticiser or in other plasticisers known in the field.

The leather 1 comprises, at the outer surface 2, an outer layer 3, very thin and substantially transparent, capable of conferring on the leather 1 the properties of feel, resistance to abrasion and surface finish. The outer layer 3 is preferably obtained by spreading a polymeric material based on polycarbonate, polyurethane or acrylic resin dissolved in an organic solvent, such as toluene, methylethylketone (MEK), dimethylformamide (DMF), or alcohols, in an amount of around 20 g/m².

The leather 1 further comprises a first layer 4, coupled to the outer layer 3 on the opposite side from the outer surface 2, and in which is dispersed an effective amount of pigments capable of imparting a coloration to the leather 1. Preferably, the coloration is dark, for example in the dark shades of blue, red, green or grey, and even more preferably the coloration is black.

The first layer 4 is preferably obtained by spreading a PVC plastisol having a K value of between 72 and 80, dispersed in 90 phr of phthalic plasticiser and stabilised with inorganic salts based on barium and zinc, in an amount of 250-400 g/m².

Advantageously, the pigments dispersed in the first layer 4 are of the type with high infrared radiation reflectance, that is to say, pigments capable of reflecting a high fraction, at least 40%, of the infrared radiation, in particular of the near infrared, and at the same time of absorbing a high fraction, at least 80%, of the luminous radiation in the visible spectrum.

An example of such pigments is described in detail in European Patent Application No. 1553225, the content of which is expressly claimed herein. The quantity of pigment employed is between 3% and 10%, preferably around 5%.

The leather 1 further comprises a second layer 5, coupled to the first layer 4 on the opposite side from the outer surface 2. The second layer 5 is obtained by spreading a PVC plastisol fully analogous to the plastisol of the first layer 4, in an amount of 200-400 g/m². The second layer 5, differing from the first layer 4, comprises an effective amount of light-coloured pigment, preferably white, reflecting the radiation both in the visible spectrum and in the region of the near infrared. A preferred example of pigment dispersed in the second layer 5 is constituted by titanium dioxide, present in the second layer 5 in an amount of between 5% and 20%, for example around 7.5%.

The leather 1 further comprises a third layer 6, coupled to the second layer 5 on the opposite side from the outer surface 2. The third layer 6 is obtained by spreading a PVC plastisol having a K value of between 70 and 75, dispersed in 80 phr of phthalic plasticiser, stabilised with inorganic zinc salts, and filled with calcium carbonate and crosslinked with isocyanate, in an amount of 100-300 g/m². The third layer 6 has a substantially adhesive function and serves to couple, on the opposite side from the second layer 5, a layer of textile 7, for example of polyester fibre. Preferably, the textile layer 7 is of a light colour, and most preferably white.

The textile layer 7 acts as a support for the polymeric layers indicated above and its presence is necessary when the leather 1 is subsequently to be coupled by means of stitching to the material covered by it. This is the case, for example, with synthetic leathers used as covering for motorcycle saddles, in which the leather must be stitched onto the underlying padding, made for example of expanded polyurethane.

In other types of applications such as, for example, saddles for bicycles, the material constituting the padding, for example a polyurethane gel, is injected into a die, on the walls of which the covering synthetic leather is arranged. In this case the leather 1 does not provide the textile layer 7 nor the third adhesive layer 6, but only a thin layer (40-50 g/m²) of polyurethane in solvent as primer.

The leather 1 is obtained by means of a spreading process which is conventional per se. The first step comprises the spreading of the outer layer 3 on a papery support and drying thereof in an oven, after which, on the only just dried outer layer the first layer 4 is spread, which is then dried and following on, in a similar manner, the second layer 5 is spread and, if required, the third layer 6 and the textile layer 7. At the end of the spreading process and before the leather 1 is applied to the article to be covered, the papery support is removed.

Some samples of synthetic leathers prepared as described hereinafter were subjected to spectrophotometric analysis according to standard ASTM E 903-96, so as to detect the course of the reflectance of the different leathers in dependence on the wavelength of the radiation to which they are exposed.

All the samples were of course irradiated on the side corresponding to the outer surface.

### Sample 1

Sample 1 represents a leather produced according to the prior art, comprising a layer of PVC plastisol, having characteristics analogous to those indicated above with reference to the first layer 4, but in which carbon black was dispersed as pigment in order to obtain the dark coloration of the leathers. The diagram resulting from the analysis is shown in Figure 2, together with the precise reflectance value recorded at 980 nm.

### Sample 2

Sample 2 was produced as described above with reference to the leather 1, with the pigment of the first layer 4 coloured black, providing also all the layers indicated above, as well as the textile layer 7, of a light colour. This represents the preferred exemplary embodiment of the present invention. The diagram resulting from the analysis is shown in Figure 3, together with the precise reflectance value recorded at 980 nm.

### Sample 3

Sample 3 differs from the preceding sample 2 in that it does not provide the second layer 5, in which the white pigment is dispersed.

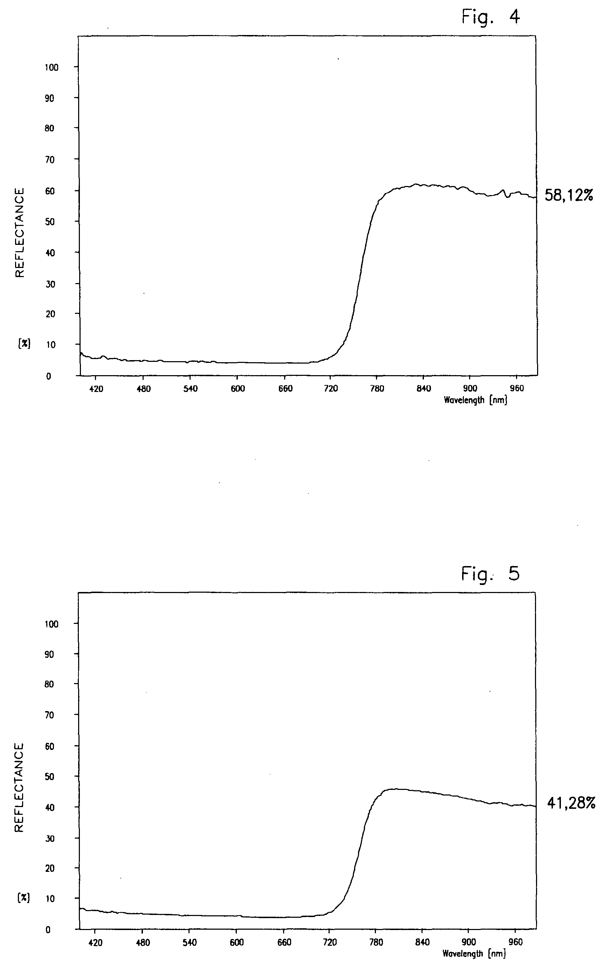

Sample 3 was subjected to analysis in two different operating states. In the first case the sample was spread out on a light-coloured support (diagram of Figure 4), while in the second case it was spread out on a dark-coloured support (diagram of Figure 5). Both Figures 4 and 5 further indicate the precise reflectance value recorded at 980 nm.

As may be observed from the results of the analyses, the leather produced according to the prior art has a reflectance of less than 10% both in the visible spectrum and in the region of the near infrared, as might be expected.

With a leather of this type, therefore, the great majority of the infrared radiation is transmitted through the leather or is absorbed by same, causing the known drawback of overheating.

Samples 2 and 3, however, exhibited a decidedly better behaviour. In fact, while maintaining a low reflectance in the visible field, necessary for imparting the dark coloration to the leather, they reflect a significant fraction of the infrared radiation, which will therefore not heat the leather or any underlying padding.

Surprisingly, more detailed examination of the results of the analyses shows that the performances of the different samples on the other hand differ significantly from one another. In particular, it will be noted that sample 2, provided with a layer with white pigment and also with light-coloured fabric, has an optimum reflectance of around 73.5%, as a against a maximum reflectance of around 58% in the case of the absence of the layer with white pigment.

It should further be noted that in the case of the absence of the layer with the white pigment, the colour of the support on which the sample to be analyzed is deposited also assumes importance, inasmuch as when changing from a light-coloured to a dark-coloured support the reflectance drops from around 58% to around 41%. On the other hand, the presence of the layer with white pigment renders substantially negligible the coloration of the support on which the sample is deposited during analysis.

The results therefore highlight the importance of the provision in the multi-layer structure of the synthetic layer according to the invention of a layer capable of reflecting the infrared radiation, constituted to some extent by the light-coloured textile and, in particular, by the layer with the white pigment. That layer therefore has the function of reflecting a large part of the infrared radiation not reflected by the pigments with high IR reflectance that are present in the first layer. The polymeric material constituting the different layers of the leather is in fact substantially transparent to infrared radiation.

The presence of the layer of white pigment and/or of the light-coloured textile therefore advantageously makes it possible to avoid overheating, not only of the synthetic leather, but also of the material to which the leather itself is applied.

Particularly important and typical is the case of polyurethane paddings used for saddles for bicycles, motorcycles and vehicles in general, which absorb a considerable part of the infrared radiation and which would therefore tend to overheat and to heat the synthetic leather by conduction.

It should further be noted that such layer may conveniently be light-coloured or white, without altering the colour of the leather as perceived by the user when examining it on the outer surface, which is normally the only visible one, inasmuch as this layer is always hidden by the first layer containing the high-reflectance coloured pigments.

The present invention therefore solves the problem mentioned above with reference to the prior art cited, at the same time offering numerous other advantages, including the fact that, by avoiding overheating of the synthetic leather, its service life is also extended, owing to the slowing down of the normal ageing processes.

## Claims

1. A synthetic leather (1), wherein an outer surface (2) is defined, intended, in use, to be facing towards the outside of an article covered with said leather (1), said leather comprising a plurality of superposed layers of polymeric material, obtained by spreading, at least a first of said layers (4) comprising one or more pigments capable of imparting a coloration to said leather, and having, overall, a reflectance to radiation in the region of the near infrared of more than 40%, **characterized in that** a second layer (5, 7) is provided, arranged on the opposite side from said outer surface with respect to said first layer, comprising an amount of titanium dioxide of between 5% and 20% by weight.

2. A synthetic leather according to claim 1, wherein said second layer is a support textile (7) for said layers of polymeric material.

3. A synthetic leather according to claim 1, wherein said second layer is one of said layers (5) of polymeric material.

4. A synthetic leather according to claim 3, wherein said first and said second layer of polymeric material are based on polyurethane or polyvinyl chloride.

5. A synthetic leather according to claim 4, wherein said first and second layer are obtained by spreading plastisol based on polyvinyl chloride produced in emulsion dispersed in a phthalic plasticiser.

6. A synthetic leather according to one or more of the preceding claims, wherein said pigments contained in said first layer are black.

7. A saddle for bicycles or motorcycles, comprising a covering including a synthetic leather, **characterized in that** said synthetic leather is according to one or more of the preceding claims.

8. A seat for motor vehicles, comprising a covering including a synthetic leather, **characterized in that** said synthetic leather is according to one or more of claims 1 to 6.

## Patentansprüche

1. Kunstleder (1), wobei eine äußere Fläche (2) definiert ist, die bei Verwendung vorgesehen ist, in Richtung der Außenseite eines Gegenstandes, der mit dem Leder (1) bedeckt ist, gerichtet zu sein, wobei das Leder eine Mehrzahl von überlagerten Schichten eines Polymermaterials aufweist, die durch Auftragen erhalten wird, wobei zumindest eine erste der Schichten (4) ein oder mehrere Pigmente aufweist, die eine Färbung an das Leder weitergeben können, und die insgesamt eine Strahlungsreflexion im Bereich nahe Infrarot von mehr als 40 % aufweist, **dadurch gekennzeichnet, dass** eine zweite Schicht (5, 7) vorgesehen ist, die auf der gegenüberliegenden Seite von der äußeren Fläche bezüglich der ersten Schicht angeordnet ist, die eine Menge von Titandioxid zwischen 5 und 20 Gew% aufweist.

2. Kunstleder gemäß Anspruch 1, wobei die zweite Schicht ein Unterstützungsgewebe (7) für die Schichten aus Polymermaterial ist.

3. Kunstleder gemäß Anspruch 1, wobei die zweite Schicht eine der Schichten (5) aus Polymermaterial ist.

4. Kunstleder gemäß Anspruch 3, wobei die erste und zweite Schicht aus Polymermaterial auf Polyurethan oder Polyvinylchlorid basieren.

5. Kunstleder gemäß Anspruch 4, wobei die erste und zweite Schicht durch Auftragen von Plastisol erhalten wird, das auf Polyvinylchlorid basiert, das in einer Emulsion erzeugt wird, die in einem Phthal-Weichmacher verteilt wird.

6. Kunstleder gemäß einem oder mehreren der vorhergehenden Ansprüche, wobei die Pigmente, die in der ersten Schicht enthalten sind, schwarz sind.

7. Sattel für Fahrräder oder Motorräder, der einen Belag mit einem Kunstleder aufweist, **dadurch gekennzeichnet, dass** das Kunstleder gemäß einem oder mehreren der vorhergehenden Ansprüche ist.

8. Sitz für Fahrzeuge, der einen Bezug mit einem Kunstleder aufweist, **dadurch gekennzeichnet, dass** das Kunstleder gemäß einem oder mehreren der Ansprüche 1 bis 6 ist.

## Revendications

1. Cuir synthétique (1), dans lequel une surface extérieure (2) est définie, destinée, en usage, à faire face à l'extérieur d'un article recouvert par ledit cuir (1), ledit cuir comprenant une pluralité de couches superposées de matière polymérique, obtenues par étalement, au moins une première desdites couches (4) comprenant un ou plusieurs pigments capables de conférer une coloration audit cuir, et ayant globalement une réflexion au rayonnement dans la région de l'infrarouge proche de plus de 40 %, **caractérisé en ce qu'**une seconde couche (5, 7) est prévue, disposée du côté opposé de ladite surface extérieure par rapport à ladite première couche, comprenant une quantité de dioxyde de titane située entre 5 % et 20 % en poids.

2. Cuir synthétique selon la revendication 1, dans lequel ladite seconde couche est un textile support (7) pour lesdites couches de matière polymérique.

3. Cuir synthétique selon la revendication 1, dans lequel ladite seconde couche est une desdites couches (5) de matière polymérique.

4. Cuir synthétique selon la revendication 3, dans lequel ladite première et ladite seconde couches de matière polymérique sont à base de polyuréthane ou de polychlorure de vinyle.

5. Cuir synthétique selon la revendication 4, dans lequel ladite première et ladite seconde couches sont obtenues par étalement d'un plastisol à base de polychlorure de vinyle produit en émulsion dispersée dans un plastifiant phtalique.

6. Cuir synthétique selon une ou plusieurs des revendications précédentes, dans lequel lesdits pigments contenus dans ladite première couche sont noirs.

7. Selle pour bicyclettes ou motocyclettes, comprenant un recouvrement incluant un cuir synthétique, **caractérisée en ce que** ledit cuir synthétique est selon l'une ou plusieurs des revendications précédentes.

8. Siège pour véhicules motorisés, comprenant un recouvrement incluant un cuir synthétique, **caractérisé en ce que** ledit cuir synthétique est selon l'une ou plusieurs des revendications 1 à 6.
